# EUROPÄISCHE PATENTSCHRIFT

(11) **EP 2 709 932 B1**
(45) Veröffentlichungstag und Bekanntmachung des Hinweises auf die Patenterteilung: **20.07.2016**
(21) Anmeldenummer: 12727607.9
(22) Anmeldetag: 14.05.2012
(51) Int. Cl.: B65G 1/04, B65G 1/137, B65G 47/51

(54) **VERFAHREN UND ANLAGE ZUM LAGERN UND/ODER KOMMISSIONIEREN VON WARENEINHEITEN**
METHOD AND PLANT FOR STORING AND/OR ORDER PICKING PRODUCTS
PROCÉDÉ ET INSTALLATION POUR STOCKER ET/OU PRÉPARER DES COMMANDES DE PRODUITS

(30) Priorität: 17.05.2011 DE 102011050437
(43) Veröffentlichungstag der Anmeldung: 26.03.2014
(73) Patentinhaber: Swisslog AG, 5033 Buchs/Aarau (CH)
(72) Erfinder: WOODTLI, Werner, CH-5600 Lenzburg (CH); DEHKES, Tom, Jarle, N-0472 Oslo (NO); VAN DER ZANDT, Cornelis, B-2550 Kontich (BE)
(74) Vertreter: Patentanwälte und Rechtsanwalt Weiß, Arat & Partner mbB
(86) Internationale Anmeldenummer: PCT/EP2012/058893
(87) Internationale Veröffentlichungsnummer: WO 2012/156355

(56) Entgegenhaltungen:
- EP-A1- 0 108 496
- EP-A2- 1 462 394
- WO-A1-2005/077789
- DE-A1-102007 054 867
- FR-A1- 2 915 977
- US-A1- 2009 074 545

## Beschreibung

### GEBIET DER ERFINDUNG

Die Erfindung betrifft ein Verfahren zum Lagern und/oder Kommissionieren von Waren und/oder Wareneinheiten und/oder Wareneinheitengruppen in einer Lager- und/oder Kommissionieranlage mit einem Pufferlager.

### STAND DER TECHNIK

In vielen Schriften werden einzelne Elemente zum lagern und/oder kommissionieren von waren in einer entsprechenden Anlage beschrieben. So befasst sich beispielsweise die WO 2005/077789 A1 mit einem automatischen Warenhaus und einem automatischen Fahrzeug, um Waren in dieses automatische Warenhaus zu verbringen. Hier ist eine Lifteinheit an dem Warenhaus gezeigt, welche frontseitig angeordnet ist. Ansonsten werden die Fahrzeuge näher beschrieben. Ein Bezug zu einem Gesamtsystem mit Depalletiereinrichtung und Palletiereinrichtung ist nicht erkennbar.

Ganze Logistiksysteme für Waren bzw. Wareneinheiten spielen heute aber eine immer grössere Rolle. Dabei führt die Entwicklung hin zu immer stärkerer Automatisierung, um das Personal von eintöniger und ungesunder Arbeit zu entlasten, um Kosten und Zeit zu sparen und um die Wirtschaftlichkeit der Systeme zu erhöhen. Bestimmte Wareneinheiten gleichen oder ungleichen Typs werden typischerweise in das Logistiksysteme eingeführt, was auf beliebigen Transporteinheiten geschieht. In einem Logistiksystem werden dann diese Transporteinheiten gelagert, auseinander genommen, sortiert und je nach Kundenwunsch wieder zu neuen Transporteinheiten zusammengestellt.

Ein derartiges Logistiksystem ist beispielsweise in der DE 103 13 576 B4 beschrieben. Dort geschieht eine Einlagerung von Wareneinheiten in ein Hochregallager sowie die Auslagerung aus diesem. Dieses Handling wird von automatisierten und rechnergesteuerten Regalfahrzeugen durchgeführt. Bei dem Hochregallager handelt es sich um ein herkömmliches Palettenlager, mit dem ein Tablarlager über eine automatisierte Fördertechnik verbunden ist. Im Tablarlager werden zu kommissionierende Wareneinheiten einzeln auf Tablaren gelagert. Somit ist also jedes Tablar mit einer einzigen Verpackungseinheit beladen. Diese einzelnen Verpackungseinheiten werden dann auch einzeln gehandhabt, wozu viel Zeit benötigt wird und eine umfangreiche Geräteausstattung und viel Platz notwendig ist.

Demgegenüber beschreibt die WO 2007/134841 A1 eine Kommissionieranlage mit Hochregallager, mindestens einem Tablarlager, mindestens einer Packstation und mindestens einer Versandstation. Dabei geschieht ein schichtweises Depalletieren von Verpackungseinheiten, die eine, insbesondere vollständige Palettenlage bilden, von einer Palette herunter auf ein entsprechend dimensioniertes Tablar. Dieses Tablar mit der gesamten Palettenlage wird dann in ein Tablarlager verbracht. Je nach Auftrag werden dann entsprechende Tablare abgerufen und neue Transporteinheiten aus den einzelnen Wareneinheiten zusammengestellt. Dies bedeutet, dass eine relativ grosse Einheit bewegt und eingelagert werden muss, wozu erheblicher Platz vonnöten ist. Ferner müssen an vielen Stationen nicht vollständig entleerte Warenträger gehandhabt und hin- und herbewegt werden, was einen erheblichen Aufwand bedeutet. Um die Wahrscheinlichkeit der vollständigen Entleerung eines Tablars zu erhöhen, werden mehrere Kommissionieraufträge zusammengefasst (Batch), was zur Folge hat das die Wareneinheiten später wieder durch komplizierte Technik und Abläufe auf einzelne Aufträge sortiert werden müssen.

Desweiteren befasst sich die US 2009/0074545 A1 mit einem Materialhandlingsystem zum Auswählen und Kombinieren von Waren in einem ausgehenden Behälter. Hierbei sind autonome Transportfahrzeuge vorgesehen, die auf einem Schienennetz fahren. Mit diesen Fahrzeugen werden dieselben Produkte von einer Ladestation zu einer Bestimmungsstation verbracht, wo die Waren in einem Ausgangscontainer zusammengestellt werden. Die Fahrt eines jeden Fahrzeugs auf dem Schienennetz ist computerkontrolliert, und jedes Fahrzeug beinhaltet Einrichtungen zum automatischen Be- und Entladen der Waren.

### OFFENBARUNG DER ERFINDUNG

Aufgabe der vorliegenden Erfindung ist es, ein Verfahren und eine Anlage der obigen Art zu schaffen, mit der Wareneinheiten schnell, automatisiert, platzsparend und kostengünstig gehandhabt und weiter behandelt werden können.

Zur Lösung der Aufgabe führt, dass Ware, Wareneinheit und/oder Wareneinheitengruppe in einer auf eine Depalettiereinrichtung folgenden Beladeeinrichtung mit Hilfe eines Lastaufnahmemittels eines Transportshuttles auf das Transportshuttle geladen und auf einem Shuttle Loop zu einem Pufferlager transportiert wird, wo das beladene Transportshuttle von einer Lifteinheit, die dem Pufferlager vorgesetzt Ist, auf unterschiedliche Ebenen angehoben bzw. abgesenkt wird, die Waren und/oder Wareneinheiten und/oder Wareneinheitengruppe in dem Pufferlager von mindestens einem Transportshuttle von der Lifteinheit weg zu einer Umkehreinheit und zurück zur Lifteinheit bewegt werden und zumindest zeitweise auf dem Transportshuttle verbleiben.

Zur Lösung der Aufgabe führt weiterhin ein Verfahren zum Lagern und/oder Kommissionieren von Waren und/oder Wareneinheiten und/oder Wareneinheitengruppen in einer Lager- und/oder Kommissionieranlage mit einem Pufferlager, wobei ein beladenes Transportshuttle von einer Lifteinheit, die dem Pufferlager vorgesetzt ist, auf unterschiedliche Ebenen angehoben bzw. abgesenkt wird, die Waren und/oder Wareneinheiten und/oder Wareneinheitengruppe in dem Pufferlager von mindestens einem Transportshuttle von der Lifteinheit weg zu einer Umkehreinheit und zurück zur Lifteinheit bewegt werden und zumindest zeitweise auf dem Transportshuttle verbleiben, die Waren, Wareneinheiten und/oder Wareneinheitengruppen vom Transportshuttle im Pufferlager abgeholt und über die Lifteinheit und eine Transportschiene bzw. einen Shuttle Loop einer Palettiereinrichtung zugeführt werden.

Die Erfindung hat gegenüber dem Stand der Technik den Vorteil, dass Tablare als Träger, Transport- und Lagerhilfsmittel der Wareneinheiten nicht benötigt werden. Damit sind auch keine Fördereinrichtungen für das Transportieren, Stapeln, Entstapeln, Puffern und Zwischenlagern von Tablaren mehr notwendig. Das Transportshuttle und eine Transportschienenanlage übernehmen diese Aufgaben vollständig.

Bei einem erfindungsgemässen Verfahren zum Lagern und/oder Kommissionieren von Waren und/oder Wareneinheiten in einer Lager- und/oder Kommissionieranlage mit einem Pufferlager werden die Waren und/oder Wareneinheiten zumindest in dem Pufferlager von mindestens einem Transportshuttle bewegt. Zumindest in dem Pufferlager verbleiben die Waren und/oder Wareneinheiten dabei vorzugsweise auf dem Transportshuttle. Bei einem bevorzugten Verfahren werden die Waren und/oder Wareneinheiten vorzugsweise reihenweise in einer Depalettiereinrichtung von einem Depalettierbalken geschoben und/oder gezogen.

Bei einem bevorzugten Verfahren wird mit Hilfe eines Saugnapfes zumindest zeitweise eine lösbare Verbindung zwischen dem Depalettierbalken und einer Ware und/oder Wareneinheit hergestellt. Besonders bevorzugt wird von einer Mehrzahl von Saugnäpfen eine solche lösbare Verbindung hergestellt.

Bei einem bevorzugten Verfahren wird die Ware und/oder Wareneinheit von dem Depalettierbalken angehoben.

Bei einem besonders bevorzugten Verfahren wird in der epalettiereinrichtung ein keilförmiges Übernahmeband unter die Ware und/oder Wareneinheit geschoben.

Ein besonders vorteilhaftes Verfahren ist dadurch gekennzeichnet, dass die Ware und/oder Wareneinheit vom Depalettierbalken auf ein Abtransportband geschoben und/oder gezogen wird.

Bei einem bevorzugten Verfahren wird die Ware und/oder Wareneinheit nach einer Depalettierung auf dem Transportband mit einem Vision-System auf Korrektheit, Unversehrtheit und Orientierung geprüft, und dann der Rotationseinheit zugeführt und/oder in der Rotationseinheit gedreht.

Ein weiteres Vision-System überprüft den Depalettiervorgang laufend, erkennt das Lagenbild und gibt die Information an die Steuerung der Depalettiereinheit weiter. Dieses System erkennt vorzugsweise auch, ob eine Zwischenlage vorhanden ist. Entsprechend wird die Steuerung die Entnahme der Zwischenlage auslösen, bevor der nächste Depalettiervorgang ausgelöst wird.

Im anschließenden Sammelband werden Gruppen von Wareneinheiten gebildet, sofern mehrere Einheiten auf dem Transportshuttle Platz finden.

Bei einem erfindungsgemäßen Verfahren wird die Ware und/oder Wareneinheitengruppe mittels eines Lastaufnahmemittels, bevorzugt eines Teleskoparmpaares, des Transportshuttles auf das Transportshuttle geladen. Das Lastaufnahmemittel ist in der Lage, ein einzelnes oder mehrere Wareneinheiten gleichzeitig zu bewegen.

Besonders vorteilhaft ist es, wenn die Ware und/oder Wareneinheit in der Beladeeinrichtung mit Hilfe eines Förderbands oder Transportbands des Transportshuttles auf das Transportshuttle geladen wird.

Die Waren und/oder Wareneinheiten werden von dem Transportshuttle in das Pufferlager transportiert. Beim einem typischen Verfahren werden die Waren und/oder Wareneinheiten von dem Transportshuttle auf einer Transportschiene transportiert.

Der Transport der Waren und/oder Wareneinheiten zusammen mit dem Transportshuttle geschieht in einer Lifteinheit. Hierbei ist es besonders vorteilhaft, wenn das beladene Transportshuttle von der Lifteinheit auf unterschiedliche Ebenen eines Pufferlagers angehoben bzw. abgesenkt wird.

Bei einem besonders vorteilhaften Verfahren wird ein Fahrauftrag des Transportshuttles optimiert, so dass das Transportshuttle direkt nach einer Einlagerung an einem dem Ort der Einlagerung nahe liegenden Stelle der Lager- und/oder Kommissionieranlage eine Auslagerung vornimmt. Dies hat den Vorteil, dass der Weg, welchen das Transportshuttle zur Erfüllung seiner Aufgaben zurücklegen muss, minimiert wird, was beispielsweise eine Zeit- und Energieersparnis zur Folge hat.

Bei einem vorteilhaften Verfahren werden die Waren und/oder Wareneinheiten von dem Transportshuttle im Pufferlager abgeholt und über die Transportschiene einer Palettiereinrichtung zugeführt. Besonders vorteilhaft ist es, wenn die Waren und/oder Wareneinheiten zusammen mit dem Transportshuttle über die Transportschiene und/oder die Lifteinheit einer Palettiereinrichtung zugeführt werden.

Bei Systemen hoher Leistungen werden mehrere Transportbahnen einen Zugang zu einer Palettiereinrichtung haben. Damit kann die Systemleistung entsprechend der Anzahl Transportbahnen multipliziert werden.

Die Einhaltung der Sequenz der Wareneinheiten erfolgt vorzugsweise in mehreren Stufen: Über die optimale Wahl des Zeitpunkt, an dem ein Transportshuttle einen Auslagerauftrag erhält, über die richtige Reihenfolge, in der die Lifte die Shuttles auf den Lagerebenen abholen, über den richtigen Zeitpunkt, an dem ein Shuttle in den Transportloop einfährt und über die Wahl des nächsten Zuführband, von dem die Dreh-/Schiebeeinheit die Wareneinheit übernimmt und dem Teleskopband zuführt.

Als Ergänzung kann das Zuführband mit einer zusätzlichen Sequenziereinheit bestückt werden. Das hat den Vorteil, dass die Waren und/oder Wareneinheiten nicht zwangsläufig in der Reihenfolge, in welcher sie an der Palettiereinrichtung eintreffen, auf Paletten verladen werden müssen, sondern zunächst im Sequenzspeicher eine kurze Warteposition einnehmen können.

Bei typischen Verfahren werden die Waren und/oder Wareneinheiten der Palettiereinrichtung über die Dreh-/Schiebeeinheit direkt zugeführt, ohne Zwischenpufferung in einem Sequenzpuffer. Die Aufgabe der Dreh-/Schiebeeinheit liegt darin, dass die Waren und/oder Wareneinheiten vor einer Palettierung in eine besonders vorteilhafte Position gedreht werden können. Zur Unterstützung dieser Aufgabe werden die Zuführbahnen vorzugsweise mit einem Vision-System ausgerüstet, das noch einmal Korrektheit, Unversehrtheit und Orientierung der Wareneinheiten prüft.

Bei einem typischen Verfahren werden die Waren und/oder Wareneinheiten mit Hilfe des Teleskopbandes und des Kopfbandes entsprechend der vom Lagerverwaltungssystem vorberechneten Position auf der Palette abgesetzt.

Das gewählte Verfahren erlaubt einen kontinuierlichen Fluss von den, Zuführbändern auf das Kopfband der Palettiereinrichtung. Die Platzierung der Wareneinheiten erfolgt vorzugsweise in Reihen, beginnend von der gegenüberliegenden Ecke des Palettierschachtes, wobei der Teleskophub sich synchron mit Teleskopband und Kopfband bewegt. Ein weiteres Vision-System überprüft laufend den korrekten Ablauf des Palettiervorganges, registriert Abweichungen von vorberechneten Ablauf und gibt entsprechende Kalibrierkorrekturen an die Steuerung der Palettiereinheit weiter.

Eine erfindungsgemässe Lager- und/oder Kommissionieranlage zum Lagern und/oder Kommissionieren von Waren und/oder Wareneinheiten mit einem Pufferlager, einer Depalettiereinrichtung und einer Palettiereinrichtung umfasst typischerweise mindestens ein Transportshuttle zum Transportieren der Waren und/oder Wareneinheiten zwischen der Depalettiereinrichtung und der Palettiereinrichtung. Vorzugsweise umfasst eine erfindungsgemässe Lager- und/oder Kommissionieranlage mindestens 10, bevorzugt mindestens 20, besonders bevorzugt mindestens 50 Transportshuttles. Besonders bevorzugt wird eine Lager- und/oder Kommissionieranlage mit mindestens 100 Transportshuttles.

Bei einer vorteilhaften Ausführungsform umfasst die Lager- und/oder Kommissionieranlage mindestens eine Transportschiene zum Führen des Transportshuttles. Besonders bevorzugt umfasst die Lager- und/oder Kommissionieranlage eine Mehrzahl von Transportschienen und/oder ein Transportschienensystem.

Eine erfindungsgemässe Lager- und/oder Kommissionieranlage umfasst vorteilhafter Weise eine Lifteinheit zum Anheben und/oder Absenken des Transportshuttles. Die Lifteinheit ist typischer Weise bei dem Pufferlager bzw. in unmittelbarer Nähe des Pufferlagers angeordnet.

Besonders vorteilhaft ist es, wenn die Lager- und/oder Kommissionieranlage eine Beladeeinrichtung zum Beladen des Transportshuttles mit Waren und/oder Wareneinheiten aus einem Speicher umfasst.

Bei vorteilhaften Ausführungsformen umfasst die Lager- und/oder Kommissionieranlage eine Entladeeinrichtung zum Entladen der Waren und/oder Wareneinheiten vor der Palettiereinrichtung.

Bei vorteilhaften Ausführungsformen umfasst die Depalettiereinrichtung einen Depalettierbalken und ein keilförmiges Übernahmeband.

Vorteilhafterweise umfasst die Depalettiereinrichtung mindestens zwei, besonders bevorzugt mindestens vier Depalettierbalken.

Besonders vorteilhaft ist es, wenn der Depalettierbalken bzw. mindestens einer der Depalettierbalken mindestens einen Saugnapf, bevorzugt mindestens zwei Saugnäpfe, besonders bevorzugt eine ganze Reihe von Saugnäpfen umfasst. Der Vorteil eines solchen Saugnapfes am Depalettierbalken liegt darin, dass der Depalettierbalken durch den Saugnapf in die Lage versetzt wird, mit einer Ware oder einer Wareneinheit zumindest zeitweise eine Verbindung, insbesondere eine wiederlösbare Verbindung, einzugehen. Dies ist beim Schieben und/oder Ziehen von Waren und/oder Wareneinheiten von Vorteil.

Eine besonders vorteilhafte Lager- und/oder Kommissionieranlage ist dadurch gekennzeichnet, dass die Depalettiereinrichtung eine Rotationseinheit zum Drehen der Waren und/oder Wareneinheiten in bestimmte Positionen umfasst.

Bei typischen Ausführungsformen ist das Pufferlager geeignet, von dem Transportshuttle zum Zwischenlagern der Waren und/oder Wareneinheiten befüllt oder entleert zu werden. Besonders bevorzugt ist das Pufferlager geeignet, das Transportshuttle bzw. eine Mehrzahl an Transportshuttles zusammen mit Waren und/oder Wareneinheiten aufzunehmen. Dabei verbleiben die Waren und/oder Wareneinheiten typischerweise auf dem Transportshuttle. Typischerweise wird das Transportshuttle direkt, d. h, typischerweise ohne weitere Tablare oder andere Hilfselemente, in dem Pufferlager zwischengelagert. Dies hat den Vorteil, dass keine weiteren Aufbewahrungselemente ausser den Transportshuttles benötigt werden, und dass ein Be- und Entladen des Pufferlagers mit Waren und/oder Wareneinheiten vereinfacht und beschleunigt wird.

Bei einer erfindungsgemässen Lager- und/oder Kommissionieranlage umfasst das Transportshuttle typischerweise ein Lastaufnahmemittel, bevorzugt Teleskoparmpaar, zum Be- und/oder Entladen des Transportshuttles.

Das Lastaufnahmemittel mit dem Teleskoparmpaar ist in der Lage, auf einem Lagerplatz mehrere Wareneinheiten zu platzieren und mehrere gleichzeitig wieder zu entnehmen. Es ist aber zusätzlich in der Lage, auch einzelne der Wareneinheiten zu entnehmen oder zuzulagern.

Bei besonders vorteilhaften Ausführungsformen umfasst das Transportshuttle ein Förderband zur Unterstützung des Beladens und/oder Entladen des Transportshuttles und zur Zentrierung der Wareneinheit auf den Shuttle. Zudem ist ein paralleler oder gleichzeitiger Belade- und Entladevorgang möglich, was die Leistung der Shuttles und damit die Systemleistung erhöht.

Bei einer besonders vorteilhaften Lager- und/oder Kommissionieranlage umfasst die Palettiereinrichtung eine Dreheinheit. Dies hat den Vorteil, dass Waren- und/oder Wareneinheiten vor einer Palettierung von der Dreheinheit in eine besonders vorteilhafte Position gebracht werden können.

Bei typischen Ausführungsformen umfasst die Lager- und/oder Kommissionieranlage einen Palettenwickler zum Umwickeln von fertig beladenen Paletten, insbesondere an der Palettiereinrichtung fertig beladenen Paletten, mit einer Mehrzahl von Waren und/oder Wareneinheiten. Vorteilhafterweise ist der Palettenwickler geeignet, die Paletten mit Folie und/oder Band und/oder einem anderen zum Schützen bzw. Fixieren von Waren und/oder Wareneinheiten geeigneten Material zu umwickeln. Der Palettenwickler ist vorteilhaft in die Palettiereinrichtung integriert. Dadurch kann die palettierte Palette während des Palettiervorganges schrittweise beim Absenken umwickelt werden.

Eine besonders vorteilhafte Lager- und/oder Kommissionieranlage umfasst einen Palettenfluss für Ganzpaletten, mit Hilfe dessen befüllte Paletten typischerweise direkt von einem Speicher und/oder einem Eingang zu einem Ausgang der Lager- und/oder Kommissionieranlage befördert werden können.

Ein Transportshuttle zum Transportieren von Waren und/oder Wareneinheiten in einer Lager- und/oder Kommissionieranlage umfasst typischerweise einen Lastaufnahmemittel, bevorzugt Teleskoparm, zum Beladen und/oder Entladen des Transportshuttles. Besonders bevorzugt werden Ausführungsformen mit mindestens einem Teleskoparmpaar.

Ein besonders vorteilhaftes Transportshuttle umfasst mindestens ein Förderband, bevorzugt mindestens zwei Förderbänder, besonders bevorzugt mindestens vier Förderriemen, angeordnet in zwei Riemenpaaren, zum Beladen und/oder Entladen des Transportshuttles. Vorzugsweise können mehrere Wareneinheiten als Gruppe gleichzeitig in ein Lagerfach eingelagert oder ausgelagert werden. Besonders bevorzugt sind Lösungen, wo nach einer Einlagerung als Gruppe, einzelne Wareneinheiten entnommen oder zugelagert werden können.

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
**Figur 1** eine blockschaltbildliche Darstellung eines erfindungsgemässen Verfahrens zum Lagern und/oder Kommissionieren von Waren in einer Lager- und/oder Kommissionieranlage;

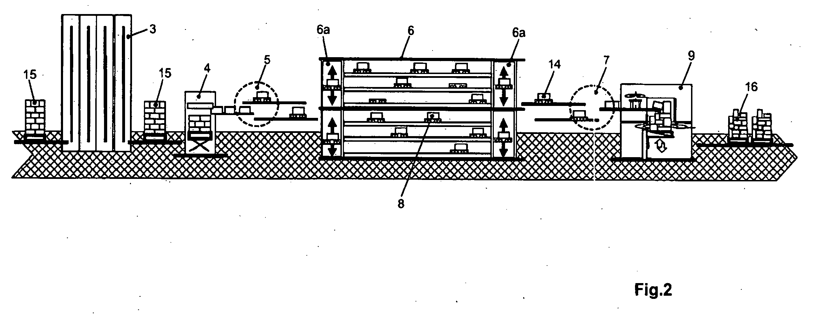

**Figur 2** Seitenansicht eines vergrössert dargestellten schematischen Ausschnitts aus einer erfindungsgemässen Lager- und/oder Kommissionieranlage;
**Figur 3** eine Draufsicht auf einen vergrössert dargestellten Ausschnitt aus einer erfindungsgemässen Lager- und/oder Kommissionieranlage, nämlich eine Einrichtung zur Depalettierung;
**Figur 3a** eine Draufsicht auf einen vergrössert dargestellten Ausschnitt aus der erfindungsgemässen Einrichtung zur Depalettierung, nämlich eine Greifeinheit für eine reihenweise Depalettierung der Wareneinheiten;
**Figur 3b** eine Seitenansicht auf einen vergrössert dargestellten Ausschnitt aus der erfindungsgemässen Einrichtung zur Depalettierung;
**Figur 3c** eine prinzipielle Darstellung der Greifeinheit des Depalettiereinrichtung mit Saugeinheit und Übernahmeband;
**Figur 4** eine prinzipielle Darstellung eines Shuttles mit einer Teleskopeinheit zum direkten Greifen und Deponieren von Wareneinheiten; wobei einzelne oder Gruppen von Wareneinheiten ein- oder ausgelagert werden können;
**Figur 4a** eine Darstellung eines Transportprinzips der Wareneinheiten von der Übernahme bei den Depalettiereinrichtungen zur Lagerung im Wareneinheitenpuffer, Auslagern in Sequenz bis zur Übergabe an einen Roboter bei den Palettiereinrichtungen;
**Figur 5** eine Seitenansicht einer Palettiereinrichtung mit Zuführungbändern, Dreh-/Schiebeeinheit, Palettierkopf, Palettierschacht, Teleskoplift und integriertem Palettenwickler.
**Figur 5a** eine Draufsicht der Palletiereinrichtung mit Zuführungbändern, Dreh-/Schiebeeinheit, Palettierkopf und Palettierschacht;
**Figur 5b** eine Seitenansicht des Palettierkopfes mit Teleskopband, Kopfband und schematischer Darstellung der Sensorik

### BESCHREIBUNG EINES BEVORZUGTEN AUSFÜHRUNGSBEISPIELS

### (Einlagerung)

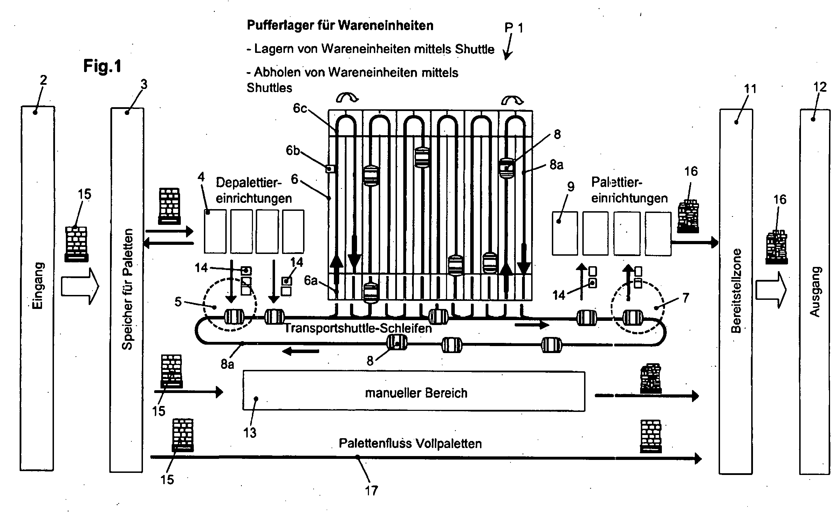

Eine erfindungsgemässe Lager-/ Kommissionieranlage (P1) weist gemäss Figur 1 einen Eingang (2) auf. Am Eingang (2) kommen Wareneinheiten (14) auf Transporteinheiten (15), beispielsweise Paletten, an.

Auf den Eingang (2) folgt ein Speicher (3) für die Transporteinheiten (15), die eine Mehrzahl von Waren oder Wareneinheiten (14) tragen, wobei diese dort zwischengespeichert werden. Dabei handelt es sich beispielsweise um ein Hochregallager.

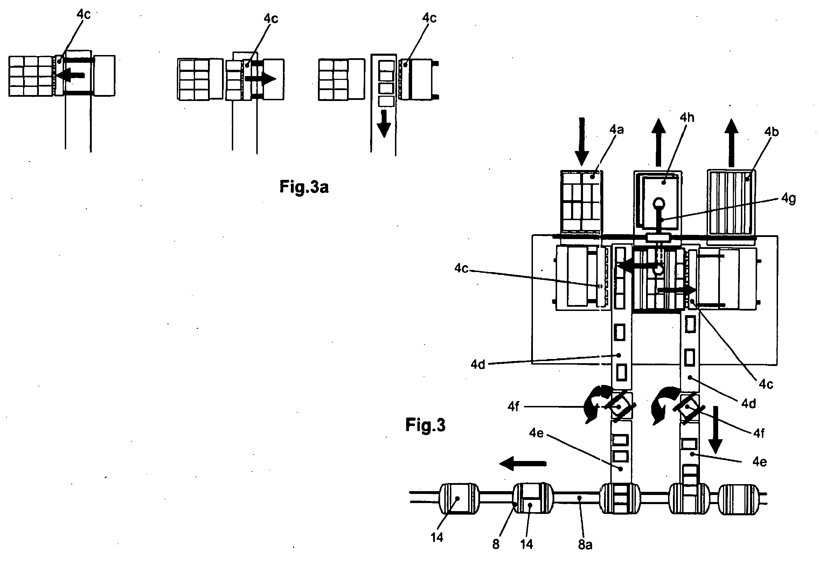

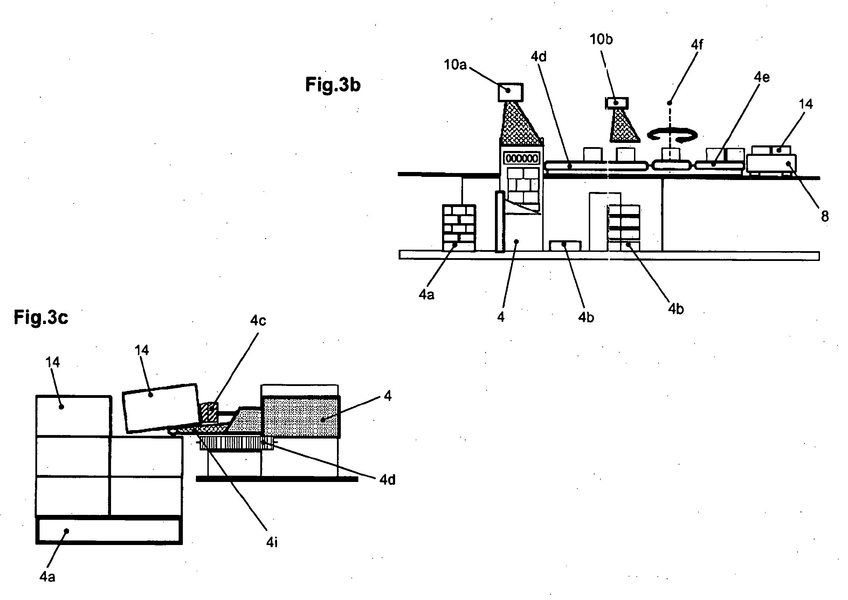

Der Speicher (3) ist mit einer Depalettiereinrichtung (4) zum Separieren der Wareneinheiten (14) verbunden. Die Depalettierung erfolgt reihenweise durch zwei symmetrisch angeordnete Depalettierbalken (4c) (siehe Figur 3) ausgerüstet mit einer Doppelreihe von Saugnäpfen, die die einzelnen Wareneinheiten (14) leicht anheben, ein leicht teleskopisches Übernahmeband (4i) (siehe Figur 3c) unterschieben und auf das Abtransportband (4d) ziehen.

Das Lagenbild der Palette wird mit einem Vision-System (10a) (Figur 3b) laufend überwacht und die Depalettiereinrichtung entsprechend optimal gesteuert. Dasselbe Vision-System (10a) erkennt ebenfalls Zwischenlagen. Dadurch wird die Entnahmeeinrichtung (4g) (Figur 3) für die Zwischenlagen aktiviert und die Zwischenlage in eine wartende Palette mit Gitterrahmen (4h) übergeben.

Anschliessend werden die einzelnen Wareneinheiten (14) auf dem Abtransportband (4d) mit dem Vision-System (10b) auf Korrektheit, Unversehrtheit und Orientierung geprüft, der Rotationseinheit (4f) zugeführt und in die richtige Position gedreht.

Auf einem Sammelband (4e) werden, wenn immer möglich, Gruppen von Wareneinheiten gebildet, und einer Beladeeinrichtung (5) für Transportshuttles (8) zugeführt.

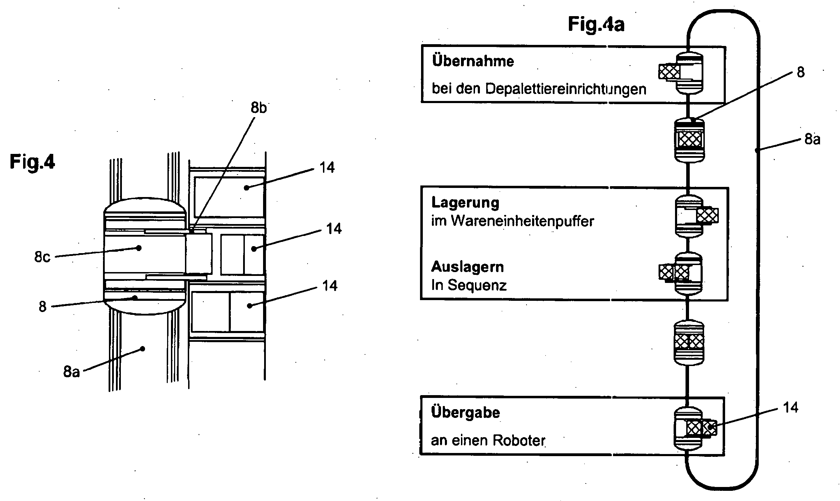

Das Transportshuttle (8) übernimmt die aktive Rolle bei der Beladung, indem es Wareneinheit (14) oder Wareneinheitengruppe mit dem Teleskoparm (8b) (siehe Figur 4) und dem unterstützenden Förderband (8c) übernimmt.

Die Transportshuttles (8) transportieren Wareneinheiten (14) oder Wareneinheitengruppen nun einzeln auf einer Transportschiene (8a) via die Lifteinheiten (6a) in ein Pufferlager (6). Die Wareneinheiten(14) werden im Pufferlager (6) einzeln oder in Gruppen zwischengelagert. Es sind dabei keine Tablare notwendig, die Wareneinheiten werden vom Transportshuttle direkt auf die Regalpositionen (6b) platziert. Im Pufferlager sind auch Umkehreinheiten (6c) vorgesehen.

Das Transportshuttle (8) ist in der Lage, einzelne oder mehrere Wareneinheiten als Gruppe gemeinsam einzulagern. Es ist ebenfalls in der Lage, einzelne aus einer Gruppe wieder auszulagern oder eine Zulagerung zu einer unvollständigen Gruppe zu machen.

Die Fahraufträge der Transportshuttles (8) sind soweit optimiert, dass jedes Transportshuttles (8) die Einlagerung in dieser Gasse und auf dem Level vornimmt, wo auch eine Auslagerung ansteht. Damit kann das Transportshuttles (8) jederzeit ein Doppelspiel mit Einlagerung und nachfolgender Auslagerung vornehmen.

### (Auslagerung)

Das Lagerverwaltungssystem unterteilt jeden Filialauftrag in einzelne Mischpaletten (16), legt die Beladereihenfolge jeder Mischpaletten (16) fest und weist sie einer Palettierstation (9) zu. Entsprechend erhalten nun die Transportshuttles (8) Fahraufträge, um Wareneinheiten im Pufferlager (6) abzuholen und via die Liftstationen (6a) und die Fahrschienen (8a) der Palettierstation (9) zuzuführen. Dort ist eine Entladeeinrichtung (7) für die Transportshuttle vorgesehen.

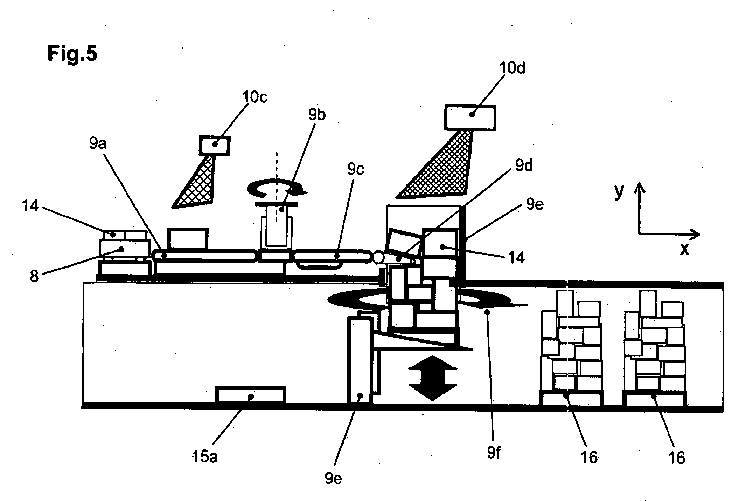

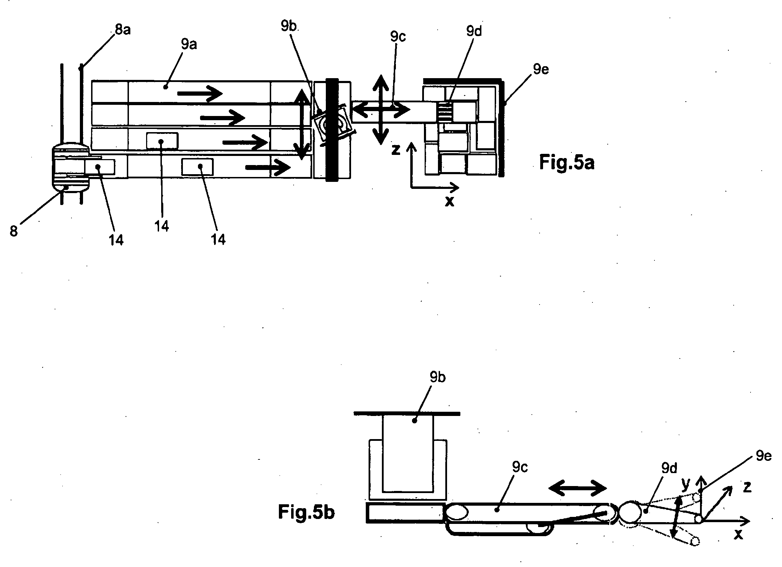

Automatisches Bilden von Filialpaletten verlangt eine Vorberechnung der Beladesequenz; diese muss bei der Auslagerung konsequent eingehalten werden. Durch geschickte Disposition der Transportshuttles (8), der Lifteinheiten (6a), der Einfahrt in den Transportschienen-Loop und der Selektion des richtigen Zuführbandes (9a) (siehe Figur 5) der Palettierstation (9) wird die verlangte Sequenz erreicht. Als zusätzliche Möglichkeit können die Zuführbänder (9a) mit einer Sequenzfunktion ergänzt werden. Damit erreichen die Wareneinheiten (14) jede Palettiereinrichtung (9) in der vordefinierten Reihenfolge.

Die Zuführbänder (9a) der Palettierstationen (9) sind ebenfalls mit einem Vision-system (10c) ausgerüstet, das Korrektheit, Unversehrtheit und Orientierung der Wareneinheiten nochmals prüft. Entsprechend wird eine Dreh-/Schiebeeinheit (9b) zu richtigen Drehung und Verschiebung angesteuert.

Die Zuführung der Palettiereinrichtung (9) ist mit der Dreheinheit (9b) ausgerüstet, damit die Wareneinheiten (14) in die vorberechnete Position gedreht werden können. Anschliessend werden die Wareneinheiten (14) auf ein Teleskopband (9c) geschoben und auf das Kopfband (9d) zur Platzierung auf der Filialpalette vorgeschoben.

Die Palettierung erfolgt von der gegenüberliegenden Position eines Palettierschachtes (9e) aus. Durch die Anordnung der Elemente ist ein kontinuierlicher Fluss von hoher Leistung mit Wareneinheiten unterschiedlicher Grösse gewährleistet. Der Palettiervorgang wird durch ein Vision-System (10d) laufend überwacht das Abweichungen zum vorberechneten Palettenbild erkennt und den Palettierer entsprechend laufend kalibriert.

Ein Palettenwickler (9f) ist in die Palettierstation integriert. Entsprechend dem Palettierfortschritt wird die Palette über den Teleskophub (9g) in kleinen Schritten durch den Palettenschacht (9e) abgesenkt und gewickelt. Die beladenen Mischpaletten (16) sind damit für einen stabilen Transport in die Filialen gesichert.

Die fertigen Mischpaletten (16) werden , anschliessend dem Bereitstellungsbereich zugeführt und dort gemäss Filialennummer bereitgestellt. Anschliessend erfolgen nach einem Ausgang (12) die Beladung der LKWs und der Transport in die Filialen.

Vom Speicher (3) führt des Weiteren ein direkter Palettenfluss (17) für volle Transporteinheiten (15) direkt zu einer Bereitstellzone (11). Des Weiteren führt ein Weg auch zu einem manuellen Bereich (13), in welchem eine manuelle Behandlung der Transport- bzw. Wareneinheiten erfolgen kann.

### Bezugszeichenliste

| | |
|---|---|
| P1 | Laqer- und/oder Kommissionieranlage |
| 2 | Eingang |
| 3 | Speicher für Paletten |
| 4 | Depalettiereinrichtung |
| 4a | Zuführung Völlpaletten |
| 4b | Abtransport Leerpaletten |
| 4c | Depalettierbalken |
| 4d | Abtransportband Wareneinheiten |
| 4e | Sammelband für Gruppenbildung |
| 4f | Rotationseinheit |
| 4g | Entnahmeeinrichtung für Zwischenlage |
| 4h | Palette mit Gitterrahmen |
| 4i | Übernahmeband |
| 5 | Beladeeinrichtung der Transportshuttle |
| 6 | Pufferlager für Wareneinheiten |
| 6a | Lifteinheit |
| 6b | Lagerfach/Regalposition |
| 6c | Umkehreinheit 180qrd |
| 7 | Entladeeinrichtung der Transportshuttles |
| 8 | Transportshuttle |
| 8a | Transportschiene |
| 8b | Lastaufnahmemittel |
| 8c | Förderband |
| 9 | Palettiereinrichtung/-station |
| 9a | Zuführband von Transportschiene |
| 9b | Dreh-/Schiebeeinheit |
| 9c | Teleskopband |
| 9d | Kopfband |
| | |
| 9e | Palettierschacht |
| 9f | Integrierter Palettenwickler |
| 9q | Teleskophub |
| | |
| 10a | Vision-System Lagenbild Depalettierer |
| 10b | Vision-System Kartonorientierung Depalettierer |
| 10c | Vision-System Kartonorientierung Palettierer |
| 10d | Vision-System Palettenbild Palettierer |
| 11 | Bereitstellzone |
| 12 | Ausgang |
| 13 | Manueller Bereich |
| 14 | Waren und/oder Wareneinheiten |
| 15 | Transporteinheit |
| 15a | Leere Transporteinheit |
| 16 | Mischpalette |
| 17 | Palettenfluss Vollpaletten |
| 20 | |
| 21 | |
| 22 | |
| 23 | |
| 24 | |
| 25 | |
| 26 | |
| 27 | |
| 28 | |
| 29 | |
| 30 | |
| 50 | |

## Patentansprüche

1. Verfahren zum Lagern und/oder Kommissionieren von Waren und/oder Wareneinheiten (14) und/oder Wareneinheitengruppen in einer Lager- und/oder Kommissionieranlage (P1) mit einem Pufferlager (6), wobei Ware, Wareneinheit (14) und/oder Wareneinheitengruppe in einer auf eine Depalettiereinrichtung folgenden Beladeeinrichtung (5) mit Hilfe eines Lastaufnahmemittels (8b) eines Transportshuttles (8) auf das Transportshuttle (8) geladen und auf einem Shuttle Loop (8a) zu einem Pufferlager (6) transportiert wird, wo das beladene Transportshuttle von einer Lifteinheit (6a), die dem Pufferlager (6) vorgesetzt ist, auf unterschiedliche Ebenen angehoben bzw. abgesenkt wird, die Waren und/oder Wareneinheiten (14) und/oder Wareneinheitengruppe in dem Pufferlager (6) von mindestens einem Transportshuttle (8) von der Lifteinheit (6a) weg zu einer Umkehreinheit (6c) und zurück zur Lifteinheit (6a) bewegt werden und zumindest zeitweise auf dem Transportshuttle (8) verbleiben.

2. Verfahren zum Lagern und/oder Kommissionieren von Waren und/oder Wareneinheiten (14) und/oder Wareneinheitengruppen in einer Lager- und/oder Kommissionieranlage (P1) mit einem Pufferlager (6), wobei ein beladenes Transportshuttle von einer Lifteinheit (6a), die dem Pufferlager (6) vorgesetzt ist, auf unterschiedliche Ebenen angehoben bzw. abgesenkt wird, die Waren und/oder Wareneinheiten (14) und/oder Wareneinheitengruppe in dem Pufferlager (6) von mindestens einem Transportshuttle (8) von der Lifteinheit (6a) weg zu einer Umkehreinheit (6c) und zurück zur Lifteinheit (6a) bewegt werden und zumindest zeitweise auf dem Transportshuttle (8) verbleiben, die Waren, Wareneinheiten und/oder Wareneinheitengruppen (14) vom Transportshuttle (8) im Pufferlager (6) abgeholt und über die Lifteinheit (6a) und eine Transportschiene (8a) bzw. einen Shuttle Loop einer Palettiereinrichtung (9) zugeführt werden.

3. Verfahren nach Anspruch 1 und 2, **dadurch gekennzeichnet, dass** der Shuttle Loop (8a) eine Endlosschlaufe ist,
wobei die Waren und/oder Wareneinheiten (14) in der Depalettiereinrichtung (4) von einem Depalettierbalken (4c) geschoben und/oder gezogen werden,
wobei mit Hilfe zumindest eines Saugnapfes zumindest zeitweise eine lösbare Verbindung zwischen dem Depalettierbalken (4c) und einer Ware und/oder Wareneinheit (14) hergestellt wird,
wobei die Ware und/oder Wareneinheit (14) vom Depalettierbalken (4c) angehoben wird,
wobei die Ware und/oder Wareneinheit (14) vom Depalettierbalken (4c) auf ein Abtransportband (4d) geschoben und/oder gezogen wird,
wobei das Abtransportband (4d) der Depalettiereinrichtung (4) mit einem Vision-System (10b) ausgestattet ist, dass Korrektheit, Unversehrtheit und Orientierung der Waren und/oder Wareneinheiten erkennt,
wobei die Ware und/oder Wareneinheit (14) nach einer Depalettierung einem Vision-System (10b) und anschliessend einer Rotationseinheit (4f) zugeführt und/oder in der Rotationseinheit (4f) gedreht wird,
wobei einzelne Waren und/oder Wareneinheiten (14) auf einem Sammelband (4e) zu Gruppen zusammengefasst werden,
wobei die Ware, Wareneinheit (14) und/oder Wareneinheitengruppe in der Beladeeinrichtung (5) mit Hilfe eines Förderbands (8c) des Transportshuttles (8) auf das Transportshuttle (8) geladen wird und zusätzlich auf dem Transportshuttle zentriert werden kann,
wobei die Waren, Wareneinheiten und/oder Wareneinheitengruppen (14) von dem Transportshuttle (8) in das Pufferlager (6) transportiert werden, wobei die Waren, Wareneinheiten und/oder Wareneinheitengruppen (14) von dem Transportshuttle (8) auf einer Transportschiene (8a) transportiert werden,
wobei die Waren, Wareneinheiten und/oder Wareneinheitengruppen (14) zusammen mit dem Transportshuttle (8) in einer Lifteinheit (6a) transportiert werden,
wobei ein Fahrauftrag des Transportshuttles (8) optimiert wird, so dass das Transportshuttle (8) direkt nach einer Einlagerung an einer dem Ort der Einlagerung naheliegenden Stelle der Lager- und/oder Kommissionieranlage (P1) eine Auslagerung vornimmt.

4. Verfahren nach Anspruch 1 der 3, **dadurch gekennzeichnet, dass** die Depalettiereinrichtung (4) mit einem Vision-System (10a) ausgestattet ist, das Lagenmuster und Zwischenlage erkennt und der Depalettiereinrichtung zur Bewegungsoptimierung weitergeleitet wird.

5. Verfahren nach einem der Ansprüche 3 oder 4, **dadurch gekennzeichnet, dass** in der Depalettiereinrichtung (4) ein Übernahmeband (4i) unter die Ware und/oder Wareneinheit (14) geschoben wird.

6. Verfahren nach einem der vorhergehenden Ansprüche in Kombination mit Anspruch 2, **dadurch gekennzeichnet, dass** die Waren, Wareneinheiten und/oder Wareneinheiten (14) der Palettiereinrichtung (9) über ein Zuführband (9a) und eine Dreh- /Schiebeeinheit (9b) zugeführt werden,
wobei die Waren und/oder Wareneinheiten während des Auslagertransports in Schritten die richtige Sequenz, insbesondere Zeitpunkt der Auftragserteilung an den Transportshuttle, Auftragsfolge an die Lifteinheiten, Freigabe der Einfahrt in den Fahrschienenloop und/oder Auftragsreihenfolge an die Dreh-/Schiebeeinrichtung, erhalten.

7. Verfahren nach Anspruch 6, **dadurch gekennzeichnet, dass** die Waren und/oder Wareneinheiten (14) auf dem Zuführband (9a) zur Palettiereinrichtung (9) von einem Vision-System (10c) überwacht werden, das der Prüfung von Korrektheit, Unversehrtheit und Orientierung der ankommenden Waren und/oder Wareneinheiten dient.

8. Verfahren nach Anspruch 6 oder 7, **dadurch gekennzeichnet, dass** die Waren und/oder Wareneinheiten (14) mit Hilfe von einer Dreh-/Schiebeeinrichtung (9b), einem Teleskopband (9c) und Kopfband (9d) in einer vorgegebenen Sequenz auf eine Palette bewegt werden,
wobei der Beladevorgang der Palettiereinrichtung laufend mit einem Vision-System (10d) überprüft wird, Abweichungen zum vorberechneten Beladungsbild erkannt und die Palettiereinrichtung entsprechend korrigierte Bewegungen ausführt.

9. Lager- und/oder Kommissionieranlage (P1) zur Durchführung des Verfahrens nach Anspruch 1 und 2, umfassend ein Pufferlager (6), eine Depalettiereinrichtung (4), eine Palettiereinrichtung (9), und ein Transportshuttle (8) zum Transportieren der Waren, Wareneinheiten und/oder Wareneinheitengruppen (14) zwischen der Depalettiereinrichtung (4), dem Pufferlager (6) und der Palettiereinrichtung (9).

10. Lager- und/oder Kommissionieranlage (P1) nach Anspruch 9, **gekennzeichnet durch** mindestens eine Transportschiene (8a) zum Führen des Transportshuttles (8),
wobei eine Lifteinheit (6a) zum Anheben und Absenken des Transportshuttles (8) bei dem Pufferlager (6) vorgesehen ist,
wobei eine Beladeeinrichtung (5) zum Beladen des Transportshuttles (8) mit Waren und/oder Wareneinheiten (14) aus einem Speicher (3) vorgesehen ist,
wobei eine Entladeeinrichtung (7) zum Entladen der Waren und/oder Wareneinheiten (14) vor der Palettiereinrichtung (9) vorgesehen ist, wobei die Depalettiereinrichtung (4) einen Depalettierbalken (4c) umfasst,
wobei der Depalettierbalken (4c) mindestens einen Saugnapf umfasst, wobei die Depalettiereinrichtung (4) eine Rotationseinheit (4f) zum Drehen der Waren und/oder Wareneinheiten (14) in bestimmte Positionen umfasst,
wobei das Pufferlager (6) geeignet ist, vom Transportshuttle (8) zum Zwischenlagern der Waren, Wareneinheiten und/oder Wareneinheiten (14) befüllt und/oder entleert zu werden,
wobei das Transportshuttle (8) ein Lastaufnahmemittel (8b) umfasst, wobei das Transportshuttle (8) ein Förderband (8c) umfasst.

11. Lager- und/oder Kommissionieranlage (P1) nach einem der Ansprüche 9 oder 10, **dadurch gekennzeichnet, dass** die Palettiereinrichtung (9) eine Dreh-/Schiebeeinheit (9b) umfasst.

12. Lager- und/oder Kommissionieranlage (P1) nach einem der Ansprüche 9 bis 11, **dadurch gekennzeichnet, dass** das Zuführband der Palettiereinrichtung (9) mit einem Sequenzpuffer ergänzbar ist.

13. Lager- und/oder Kommissionieranlage (P1) nach Anspruch einem der Ansprüche 9 bis 12, **dadurch gekennzeichnet, dass** die Palettiereinrichtung (9) Teleskopband (9c) und Kopfband (9d) umfasst.

14. Lager- und/oder Kommissionieranlage (P1) nach einem der Ansprüche 9 bis 13, **gekennzeichnet durch** einen in die Palettiereinrichtung (9) integrierten Palettenwickler (9f), wobei ein Palettenfluss (17) für Ganzpaletten vorgesehen ist.

## Claims

1. A method for storing and/or order-picking goods and/or goods units (14) and/or groups of goods units in a storage and/or order-picking installation (P1) with a buffer store (6), wherein
the goods item, goods unit (14) and/or group of goods units, in a loading means (5) which succeeds a depalletising means, is/are loaded onto a transport shuttle (8) with the aid of a load pickup means (8b) of the transport shuttle (8) and is/are transported on a shuttle loop (8a) to a buffer store (6), where the laden transport shuttle is raised or lowered to different levels by a lift unit (6a) which precedes the buffer store (6), the goods and/or goods units (14) and/or group of goods units in the buffer store (6) are moved by at least one transport shuttle (8) away from the lift unit (6a) to a reversal unit (6c) and back to the lift unit (6a) and remain at least temporarily on the transport shuttle (8).

2. A method for storing and/or order-picking goods and/or goods units (14) and/or groups of goods units in a storage and/or order-picking installation (P1) with a buffer store (6), wherein a laden transport shuttle is raised or lowered to different levels by a lift unit (6a) which precedes the buffer store (6), the goods and/or goods units (14) and/or group of goods units in the buffer store (6) are moved by at least one transport shuttle (8) away from the lift unit (6a) to a reversal unit (6c) and back to the lift unit (6a) and remain at least temporarily on the transport shuttle (8), the goods, goods units and/or groups of goods units (14) are fetched by the transport shuttle (8) in the buffer store (6) and are supplied to a palletising means (9) via the lift unit (6a) and a transport rail (8a) or a shuttle loop.

3. A method according to Claim 1 and 2, **characterised in that** the shuttle loop (8a) is an endless loop,
the goods and/or goods units (14) being pushed and/or pulled by a depalletising bar (4c) in the depalletising means (4),
a detachable connection between the depalletising bar (4c) and a goods item and/or goods unit (14) being produced at least temporarily with the aid of at least one suction cup,
the goods item and/or goods unit (14) being raised by the depalletising bar (4c),
the goods item and/or goods unit (14) being pushed and/or pulled onto a removal belt (4d) by the depalletising bar (4c),
the removal belt (4d) of the depalletising means (4) being equipped with a vision system (10b) which recognises correctness, intactness and orientation of the goods and/or goods units,
the goods item and/or goods unit (14) after depalletisation being supplied to a vision system (10b) and then to a rotation unit (4f) and/or being turned in the rotation unit (4f), individual goods and/or goods units (14) being combined into groups on a collecting belt (4e),
the goods item, goods unit (14) and/or group of goods units in the loading means (5) being loaded onto the transport shuttle (8) with the aid of a conveyor belt (8c) of the transport shuttle (8) and additionally being able to be centred on the transport shuttle, the goods, goods units and/or groups of goods units (14) being transported into the buffer store (6) by the transport shuttle (8),
the goods, goods units and/or groups of goods units (14) being transported by the transport shuttle (8) on a transport rail (8a),
the goods, goods units and/or groups of goods units (14) being transported together with the transport shuttle (8) in a lift unit (6a),
a travel order of the transport shuttle (8) being optimised so that the transport shuttle (8) directly after a storage operation carries out a retrieval operation at a point of the storage and/or order-picking installation (P1) close to the location of the storage operation.

4. A method according to Claim 1 or 3, **characterised in that** the depalletising means (4) is equipped with a vision system (10a) which recognises the layer pattern and intermediate layer and is passed on to the depalletising means for optimising movement.

5. A method according to one of Claims 3 or 4, **characterised in that** in the depalletising means (4) a transfer belt (4i) is pushed under the goods item and/or goods unit (14).

6. A method according to one of the preceding claims in combination with Claim 2, **characterised in that** the goods and/or goods units (14) are supplied to the palletising means (9) via an infeed belt (9a) and a rotation/pushing unit (9b),
the goods and/or goods units, during the retrieval transport, in steps obtaining the correct sequence, in particular time of issuing the order to the transport shuttle, order sequence to the lift units, release of the entry into the travel rail loop and/or order sequence to the rotation/pushing means.

7. A method according to Claim 6, **characterised in that** the goods and/or goods units (14) on the infeed belt (9a) to the palletising means (9) are monitored by a vision system (10c) which serves for checking correctness, intactness and orientation of the goods and/or goods units arriving.

8. A method according to Claim 6 or 7, **characterised in that** the goods and/or goods units (14) are moved onto a pallet in a specified sequence with the aid of a rotation/pushing means (9b), a telescopic belt (9c) and head belt (9d),
the loading operation of the palletising means being checked continuously with a vision system (10d), deviations from the previously-calculated load configuration being recognised and the palletising means executing correspondingly corrected movements.

9. A storage and/or order-picking installation (P1) for carrying out the method according to Claims 1 and 2, comprising a buffer store (6), a depalletising means (4), a palletising means (9) and a transport shuttle (8) for transporting the goods, goods units and/or groups of goods units (14) between the depalletising means (4), the buffer store (6) and the palletising means (9).

10. A storage and/or order-picking installation (P1) according to Claim 9, **characterised by** at least one transport rail (8a) for guiding the transport shuttle (8),
a lift unit (6a) for raising and lowering the transport shuttle (8) being provided in the buffer store (6),
a loading means (5) for loading the transport shuttle (8) with goods and/or goods units (14) from a store (3) being provided,
an unloading means (7) for unloading the goods and/or goods units (14) being provided ahead of the palletising means (9),
the depalletising means (4) comprising a depalletising bar (4c),
the depalletising bar (4c) comprising at least one suction cup,
the depalletising means (4) comprising a rotation unit (4f) for turning the goods and/or goods units (14) into certain positions,
the buffer store (6) being suitable to be filled and/or emptied by the transport shuttle (8) for temporary storage of the goods and/or goods units (14),
the transport shuttle (8) comprising a load pickup means (8b),
the transport shuttle (8) comprising a conveyor belt (8c).

11. A storage and/or order-picking installation (P1) according to one of Claims 9 or 10, **characterised in that** the palletising means (9) comprises a rotation/pushing unit (9b).

12. A storage and/or order-picking installation (P1) according to one of Claims 9 to 11, **characterised in that** the infeed belt of the palletising means (9) can be supplemented with a sequential buffer.

13. A storage and/or order-picking installation (P1) according to one of Claims 9 to 12, **characterised in that** the palletising means (9) comprises a telescopic belt (9c) and a head belt (9d).

14. A storage and/or order-picking installation (P1) according to one of Claims 9 to 13, **characterised by** a pallet wrapper (9f) integrated in the palletising means (9), with a pallet flow (17) for whole pallets being provided.

## Revendications

1. Procédé pour stocker et/ou préparer des commandes de produits et/ou d'unités de produits (14) et/ou de groupes d'unités de produits dans une installation de stockage et/ou de préparation des commandes (P1) avec un stock tampon (6), dans lequel
le produit, l'unité de produits (14) et/ou le groupe d'unités de produits dans un moyen de chargement (5) suivant un moyen de dépalettisation est chargé à l'aide d'un moyen de réception de charge (8b) d'une navette de transport (8) sur la navette de transport (8) et transporté sur une boucle de navettes (8a) vers un stock tampon (6) où la navette de transport chargée est levée ou descendue par une unité de levage (6a), qui est installée devant le stock tampon (6), à différents niveaux, les produits et/ou les unités de produits (14) et/ou le groupe d'unités de produits dans le stock tampon (6) sont déplacés d'au moins une navette de transport (8) par l'unité de levage (6a) vers une unité d'inversion (6c) et à nouveau vers l'unité de levage (6a) et restent au moins temporairement sur la navette de transport (8).

2. Procédé pour stocker et/ou préparer des commandes de produits et/ou d'unités de produits (14) et/ou de groupes d'unités de produits dans une installation de stockage et/ou de préparation des commandes (P1) avec un stock tampon (6), dans lequel une navette de transport chargée est levée ou descendue par une unité de levage (6a), qui est installée devant le stock tampon (6), à différents niveaux, les produits et/ou les unités de produits (14) et/ou le groupe d'unités de produits dans le stock tampon (6) sont déplacés d'au moins une navette de transport (8) par l'unité de levage (6a) vers une unité d'inversion (6c) et à nouveau vers l'unité de levage (6a) et restent au moins temporairement sur la navette de transport (8), les marchandises, produits et/ou les unités de produits et/ou le groupe d'unités de produits (14) sont enlevés par la navette de transport (8) dans le stock tampon (6) et alimentés par l'intermédiaire de l'unité de levage (6a) et d'un rail de transport (8a) ou d'une boucle de navettes vers un moyen de palettisation (9).

3. Procédé selon l'une des revendications 1 et 2, **caractérisé par le fait que** la boucle de navettes (8a) est une boucle sans fin,
les produits et/ou les unités de produits (14) sont poussés et/ou tirés dans le moyen de dépalettisation (4) par une poutre de dépalettisation (4c),
dans lequel est établie au moyen d'au moins une ventouse au moins temporairement une connexion amovible entre la poutre de dépalettisation (4c) et un produit et/ou une unité de produits (14),
dans lequel le produit et/ou l'unité de produits (14) sont levés par la poutre de dépalettisation (4c)
dans lequel le produit et/ou l'unité de produits (14) sont poussés et/ou tirés par la poutre de dépalettisation (4c) sur une bande de transport d'évacuation (4d),
dans lequel la bande de transport d'évacuation (4d) du moyen de dépalettisation (4) est équipé d'un système de vision (10b) qui reconnaît la correction, l'intégrité et l'orientation des produits et/ou des unités de produits,
dans lequel le produit et/ou l'unité de produits (14) est alimenté, après une dépalettisation, vers un système de vision (10b) et ensuite vers une unité de rotation (4f) et/ou tourné dans l'unité de rotation (4f),
dans lequel les produits individuels et/ou les unités de produits (14) sont regroupés sur une bande collectrice (4e) pour former des groupes,
dans lequel le produit et/ou l'unité de produits (14) et/ou le groupe d'unités de produits peut être chargé dans le moyen de chargement (5) à l'aide d'une bande de transport (8c) de la navette de transport (8) sur la navette de transport (8) et en outre centré sur la navette de transport,
dans lequel les produits, les unités de produits et/ou les groupes d'unités de produits (14) peuvent être transportés par la navette de transport (8) vers le stock tampon (6),
dans lequel les produits, les unités de produits et/ou les groupes d'unités de produits (14) sont transportés par la navette de transport (8) sur un rail de transport (8a),
les produits, les unités de produits et/ou les groupes d'unités de produits (14) sont transportés ensemble avec la navette de transport (8) dans une unité de levage (6a),
dans lequel une commande de déplacement de la navette de transport (8) est optimisée de sorte que la navette de transport (8) procède directement après une entrée en stock à un endroit de l'installation de stockage et/ou de préparation des commandes (P1) situé près de l'endroit de stockage à une sortie de stock.

4. Procédé selon la revendication 1 ou 3, **caractérisé par le fait que** le moyen de dépalettisation (4) est équipé d'un système de vision (10a) qui reconnaît le modèle de position et la position intermédiaire et le transmet au moyen de dépalettisation pour optimisation du déplacement.

5. Procédé selon l'une des revendications 3 ou 4, **caractérisé par le fait que** dans le moyen de dépalettisation (4) une bande de prise en charge (4i) est poussée sous le produit et/ou l'unité de produits (14).

6. Procédé selon l'une des revendications précédentes en combinaison avec la revendication 2, **caractérisé par le fait que** les produits, les unités de produits et/ou les groupes d'unités de produits (14) sont alimentés vers le moyen de palettisation (9) par l'intermédiaire d'une bande d'alimentation (9a) et d'une unité de rotation/poussée (9b),
les produits et/ou unités de produits reçoivent, pendant le transport de sortie de stock, par étapes la séquence correcte, en particulier le moment de la commande donnée à la navette de transport, la séquence de la commande donnée aux unités de levage, le dégagement de l'entrée dans la boucle de rails de déplacement et/ou l'ordre de la commande donnée au moyen de rotation/poussée.

7. Procédé selon la revendication 6, **caractérisé par le fait que** les produits et/ou les unités de produits (14) sont surveillés sur la bande de transport (9a) vers le moyen de palettisation (9) par un système de vision (10c) qui sert au contrôle de la correction, de l'intégrité et de l'orientation des produits et/ou des unités de produits qui arrivent.

8. Procédé selon la revendication 6 ou 7, **caractérisé par le fait que** les produits et/ou les unités de produits (14) sont déplacés à l'aide d'un moyen de rotation/poussée (9b), d'une bande télescopique (9c) et d'une bande de tête (9d) selon une séquence prédéterminée sur une palette,
dans lequel l'opération de chargement du moyen de palettisation est contrôlée en continu à l'aide d'un système de vision (10d), les écarts par rapport à l'image de chargement précalculée sont détectés et le moyen de palettisation effectue des mouvements corrigés en conséquence.

9. Installation de stockage et/ou de préparation des commandes (P1) pour la mise en oeuvre du procédé selon la revendication 1 ou 2, comportant un stock tampon (6), un moyen de dépalettisation (4), un moyen de palettisation (9) et une navette de transport (8) pour transporter les produits, les unités de produits et/ou les groupes d'unités de produits (14) entre le moyen de dépalettisation (4), le stock tampon (6) et le moyen de palettisation (9).

10. Installation de stockage et/ou de préparation de commandes (P1) selon la revendication 9, **caractérisée par** au moins un rail de transport (8a) pour le guidage de la navette de transport (8),
dans laquelle est prévue une unité de levage (6a) destinée à lever et descendre la navette de transport (8) dans le stock tampon (6),
dans laquelle est prévu un moyen de chargement (5) destiné à charger la navette de transport (8) de produits et/ou d'unités de produits (14) à partir d'un stock (3),
dans laquelle est prévu un moyen de déchargement (7) destiné à décharger les produits et/ou les unités de produits (14) devant le moyen de palettisation (9), le moyen de dépalettisation (4) comportant une poutre de dépalettisation (4c)
dans laquelle ladite poutre de dépaletisation (4c) comporte au moins une ventouse,
dans laquelle ledit moyen de dépalettisation (4) comporte une unité de rotation (4f) destinée à tourner les produits et/ou les unités de produits (14) dans certaines positions,
dans laquelle le stock tampon (6) convient pour être rempli et/ou vidé par la navette de transport (8) pour le stockage intermédiaire des produits, des unités de produits et/ou des groupes d'unités de produits (14),
dans laquelle la navette de transport (8) comporte un moyen de réception de charge (8b), dans laquelle la navette de transport (8) comporte une bande de transport (8c).

11. Installation de stockage et/ou de préparation de commandes (P1) selon l'une des revendications 9 ou 10, **caractérisée par le fait que** le moyen de palettisation (9) comporte une unité de rotation/ poussée (9b).

12. Installation de stockage et/ou de préparation de commandes (P1) selon l'une des revendications 9 à 11, **caractérisée par le fait que** la bande d'alimentation du moyen de palettisation (9) peut être complétée par un tampon séquentiel.

13. Installation de stockage et/ou de préparation de commandes (P1) selon l'une des revendications 9 à 12, **caractérisée par le fait que** le moyen de palettisation (9) comporte la bande télescopique (9c) et la bande de tête (9d).

14. Installation de stockage et/ou de préparation de commandes (P1) selon l'une des revendications 9 à 13, **caractérisée par** un enrouleur de palettes i(9f) intégré dans le moyen de palettisation (9), dans lequel est prévu un flux de palettes (17) pour des palettes complètes.
